# EUROPEAN PATENT APPLICATION

(11) **EP 4 847 122 A1**
(43) Date of publication of application: **02.12.2026**
(21) Application number: 25745348.0
(22) Date of filing: 23.01.2025
(51) Int. Cl.: B01D 71/56, B01D 69/10, B01D 69/12, B01D 67/00, B01D 61/02, C02F 1/44

(54) **POLYAMIDE REVERSE OSMOSIS SEPARATION MEMBRANE INCLUDING ANTIFOULING LAYER AND METHOD FOR MANUFACTURING SAME**

(30) Priority: 24.01.2024 KR 20240011063
(71) Applicant: Toray Advanced Materials Korea Inc., Gumi-si, Gyeongsangbuk-do 39389 (KR)
(72) Inventor: KIM, Cheonghee, Gumi-si, Gyeongsangbuk-do 39389 (KR); LEE, Jonghwa, Gumi-si, Gyeongsangbuk-do 39389 (KR)
(74) Representative: Eisenführ Speiser
(86) International application number: PCT/KR2025/001310
(87) International publication number: WO 2025/159524

(57) **Abstract**

The present invention relates to a polyamide reverse osmosis separation membrane including an antifouling layer and a method for manufacturing same. More specifically, the present invention relates to a polyamide reverse osmosis separation membrane including an antifouling layer and a method for manufacturing same, the polyamide reverse osmosis separation membrane comprising: a porous support; a porous polymer support layer formed on at least one surface of the porous support; a polyamide layer formed on the polymer support layer; and an antifouling layer formed on the polyamide layer, wherein the antifouling layer comprises a heterocyclic amine, an aliphatic diamine, or a combination thereof. The polyamide reverse osmosis separation membrane according to the present invention can improve salt rejection and antifouling properties while having an excellent permeation flow rate.

## Description

### [Technical Field]

The present invention relates to a polyamide reverse osmosis separation membrane including an antifouling layer and a method for manufacturing the same. More specifically, the present invention relates to a polyamide reverse osmosis separation membrane including an antifouling layer and a method for manufacturing the same, the polyamide reverse osmosis separation membrane comprising: a porous support; a porous polymer support layer formed on at least one surface of the porous support; a polyamide layer formed on the polymer support layer; and an antifouling layer formed on the polyamide layer, wherein the antifouling layer comprises a heterocyclic amine, an aliphatic diamine, or a combination thereof. The polyamide reverse osmosis separation membrane according to the present invention can improve salt rejection and antifouling properties while having an excellent permeation flow rate.

### [Background Art]

Osmosis refers to a phenomenon in which a solvent moves through a semipermeable membrane from a solution having a lower solute concentration to a solution having a higher solute concentration between two solutions separated by the semipermeable membrane. The pressure exerted on the solution having a higher solute concentration due to the movement of the solvent is referred to as osmotic pressure. Conversely, when an external pressure higher than the osmotic pressure is applied, the solvent moves toward the solution having a lower solute concentration, and this phenomenon is referred to as reverse osmosis.

Conventional reverse osmosis separation membranes are used for desalination processes of brackish water or seawater, and such desalination processes make it possible to provide, in large quantities, freshwater or pure water that is relatively suitable for industrial, agricultural, or household use. The desalination process of brackish water or seawater using a reverse osmosis separation membrane is a process of literally filtering salts and other dissolved ions or molecules from saline water. By passing saline water through a reverse osmosis separation membrane and pressurizing the saline water, purified water passes through the separation membrane, whereas salts and other dissolved ions or molecules cannot pass through the separation membrane.

In a separation membrane used in a membrane filtration process, phenomena such as organic fouling, inorganic fouling, particulate fouling, and bio-fouling occur depending on the use thereof, and the performance thereof continuously decreases. Accordingly, there is a need for research on a reverse osmosis separation membrane having excellent antifouling properties while having excellent flow rate and salt rejection.

For example, Korean Patent Registration No. 10-1230843 relates to an invention concerning a reverse osmosis separation membrane, and is characterized by forming a porous support layer, a polyamide layer, and a coating layer capable of additionally improving antifouling performance on the polyamide layer. However, although the above invention improved antifouling performance, there was a problem in that the flow rate decreased.

### [Prior Art Document]

[Patent Document 1] Korean Patent Registration No. 10-1230843 (2013.02.01.)

### [Detailed Description of the Invention]

### [Technical Problem]

The present invention has been made to solve the above-described problems, and the present inventors have completed the present invention after confirming that, when an antifouling layer comprising a heterocyclic amine, an aliphatic diamine, or a combination thereof is formed on a polyamide layer, a reverse osmosis separation membrane having improved salt rejection and antifouling properties while exhibiting an increased permeation flow rate can be prepared.

Accordingly, an object of the present invention is to provide a polyamide reverse osmosis separation membrane including an antifouling layer.

Another object of the present invention is to provide a method for manufacturing a polyamide reverse osmosis separation membrane including an antifouling layer.

### [Technical Solution]

Accordingly, the present invention discloses a polyamide reverse osmosis separation membrane including an antifouling layer and a method for manufacturing the same.

According to a first embodiment,
there is disclosed a polyamide reverse osmosis separation membrane including an antifouling layer, the membrane comprising:
a porous support;
a porous polymer support layer formed on at least one surface of the porous support;
a polyamide layer formed on the polymer support layer; and
an antifouling layer formed on the polyamide layer,
wherein the antifouling layer comprises a heterocyclic amine, an aliphatic diamine, or a combination thereof.

In the present invention, the heterocyclic amine may be selected from one or more selected from the group consisting of imidazole (Imidazole), pyridine (Pyridine), morpholine (Morpholine), and bipyridine (Bipyridine).

In the present invention, the heterocyclic amine may be included in an amount of 0.02 to 0.2 wt% based on the total weight of the antifouling layer.

In the present invention, the aliphatic diamine may be selected from one or more selected from the group consisting of 1,2-bis(2-aminoethoxy)ethane and 1,3-bis(2-aminopropoxy)propane.

In the present invention, the aliphatic diamine may be included in an amount of 0.001 to 0.1 wt% based on the total weight of the antifouling layer.

In the present invention, when the polyamide reverse osmosis separation membrane is operated for 1 hour under conditions of an aqueous solution containing 2,000 ppm of sodium chloride (NaCl), at a temperature of 25°C and a pressure of 225 psi, the flux may be 26 gfd or more and the salt rejection may be 99.4% or more.

In the present invention, when the polyamide reverse osmosis separation membrane is subjected to membrane fouling by circulating feed water for 2 hours under a pressure of 225 psi after additionally adding 50 ppm of dry milk, which is an organic contaminant, to feed water containing 2,000 ppm of sodium chloride (NaCl), and the flux is measured, the ratio of the reduced flux relative to the initial flux may be less than 10%.

According to a second embodiment,
there is disclosed a method for manufacturing a polyamide reverse osmosis separation membrane, the method comprising:
a first step of forming a porous polymer support layer by coating and drying a polymer solution on a surface of a porous support;
a second step of forming a polyamide layer on the surface of the polymer support layer; and
a third step of forming an antifouling layer on the surface of the polyamide layer,
wherein the antifouling layer comprises a heterocyclic amine, an aliphatic diamine, or a combination thereof.

In the present invention, the heterocyclic amine may be selected from one or more selected from the group consisting of imidazole (Imidazole), pyridine (Pyridine), morpholine (Morpholine), and bipyridine (Bipyridine), and may be included in an amount of 0.02 to 0.2 wt% based on the total weight of the antifouling layer.

In the present invention, the aliphatic diamine may be selected from one or more selected from the group consisting of 1,2-bis(2-aminoethoxy)ethane and 1,3-bis(2-aminopropoxy)propane, and may be included in an amount of 0.001 to 0.1 wt% based on the total weight of the antifouling layer.

In the present invention, the amine groups in the antifouling layer may bind to unreacted -COCl groups of the polyamide layer.

In the present invention, when the polyamide reverse osmosis separation membrane is operated for 1 hour under conditions of an aqueous solution containing 2,000 ppm of sodium chloride (NaCl), at a temperature of 25°C and a pressure of 225 psi, the flux may be 26 gfd or more and the salt rejection may be 99.4% or more, and when the membrane is subjected to membrane fouling by circulating feed water for 2 hours under a pressure of 225 psi after additionally adding 50 ppm of dry milk, which is an organic contaminant, to feed water containing 2,000 ppm of sodium chloride (NaCl), and the flux is measured, the ratio of the reduced flux relative to the initial flux may be less than 10%.

### [Effects of the Invention]

The polyamide reverse osmosis separation membrane according to the present invention forms an antifouling layer comprising a heterocyclic amine, an aliphatic diamine, or a combination thereof on the polyamide layer, and as a result, when operated for 1 hour under conditions of an aqueous solution containing 2,000 ppm of sodium chloride (NaCl), at a temperature of 25°C and a pressure of 225 psi, the membrane exhibited a flux of 26 gfd or more and a salt rejection of 99.4% or more. In addition, when membrane fouling was induced by circulating feed water for 2 hours under a pressure of 225 psi after additionally adding 50 ppm of dry milk, which is an organic contaminant, to feed water containing 2,000 ppm of sodium chloride (NaCl), and the flux was measured, the ratio of the reduced flux relative to the initial flux was confirmed to be less than 10% (see Experimental Example 1).

Accordingly, it has been demonstrated that the polyamide reverse osmosis separation membrane according to the present invention, by including an antifouling layer comprising a heterocyclic amine, an aliphatic diamine, or a combination thereof on the polyamide layer, can exhibit an excellent permeation flow rate while significantly improving salt rejection and antifouling properties.

### [Best Mode for Carrying Out the Invention]

Unless otherwise defined, all technical and scientific terms used herein have the same meanings as commonly understood by one of ordinary skill in the art to which the present invention pertains. In general, the nomenclature used herein is well known and commonly employed in the art.

In addition, throughout the present specification, when a part is described as "comprising" a certain component, it means that the part may further include other components rather than excluding other components, unless specifically stated otherwise.

### 1. Polyamide Reverse Osmosis Separation Membrane Including an Antifouling Layer

The present invention provides a polyamide reverse osmosis separation membrane including an antifouling layer, the membrane comprising:
a porous support;
a porous polymer support layer formed on at least one surface of the porous support;
a polyamide layer formed on the polymer support layer; and
an antifouling layer formed on the polyamide layer,
wherein the antifouling layer comprises a heterocyclic amine, an aliphatic diamine, or a combination thereof.

According to the present invention, when the polyamide reverse osmosis separation membrane is operated for 1 hour under conditions of an aqueous solution containing 2,000 ppm of sodium chloride (NaCl), at a temperature of 25°C and a pressure of 225 psi, the flux may be 26 gfd or more and the salt rejection may be 99.4% or more.

According to the present invention, when the polyamide reverse osmosis separation membrane is subjected to membrane fouling by circulating feed water for 2 hours under a pressure of 225 psi after additionally adding 50 ppm of dry milk, which is an organic contaminant, to feed water containing 2,000 ppm of sodium chloride (NaCl), and the flux is measured, the ratio of the reduced flux relative to the initial flux may be less than 10%.

### (1) Porous Support

According to the present invention, the porous support is a typical microporous support, and although not particularly limited thereto, the pore size thereof should not be so large as to interfere with the formation of a thin film on the porous support while being sufficiently large to allow permeated water to pass therethrough.

According to the present invention, the pore size of the porous support may be 1 to 500 nm. When the pore size of the porous support exceeds 500 nm, an ultrathin film may be depressed into the pores, such that a desired flat sheet structure may not be formed.

According to the present invention, the porous support may have an average thickness of 30 to 300 µm, preferably 50 to 200 µm, but is not limited thereto.

According to the present invention, the porous support may comprise synthetic fibers or natural fibers. For example, the synthetic fibers may comprise one or more selected from polyester fibers, polypropylene fibers, nylon fibers, and polyethylene fibers, and the natural fibers may comprise cellulosic fibers.

### (2) Porous Polymer Support Layer

According to the present invention, the porous polymer support layer may comprise one or more selected from polysulfone-based polymers, polyethersulfone-based polymers, polyamide-based polymers, polyimide-based polymers, polyester-based polymers, olefin-based polymers, polyvinylidene fluoride, and polyacrylonitrile.

### (3) Polyamide Layer

According to the present invention, the polyamide layer may be formed by interfacial polymerization of a polyfunctional amine and a polyfunctional acyl halide.

According to the present invention, the polyfunctional amine may comprise m-phenylenediamine, p-phenylenediamine, 1,3,6-benzenetriamine, 4-chloro-1,3-phenylenediamine, 6-chloro-1,3-phenylenediamine, 3-chloro-1,4-phenylenediamine, or a combination thereof, but is not limited thereto.

According to the present invention, the polyfunctional acyl halide may comprise trimesoyl chloride (Trimesoyl chloride, TMC), isophthaloyl chloride (Isophthaloyl chloride, IPC), terephthaloyl chloride (Terephthaloyl chloride, TPC), or a combination thereof, but is not limited thereto.

### (4) Antifouling Layer

According to the present invention, the antifouling layer may comprise a heterocyclic amine, an aliphatic diamine, or a combination thereof.

According to the present invention, the heterocyclic amine may be one or more selected from the group consisting of imidazole (Imidazole), pyridine (Pyridine), morpholine (Morpholine), and bipyridine (Bipyridine).

According to the present invention, the heterocyclic amine may be included in an amount of 0.02 to 0.2 wt% based on the total weight of the antifouling layer.

According to the present invention, the aliphatic diamine may be one or more selected from the group consisting of 1,2-bis(2-aminoethoxy)ethane and 1,3-bis(2-aminopropoxy)propane.

According to the present invention, the aliphatic diamine may be included in an amount of 0.001 to 0.1 wt% based on the total weight of the antifouling layer.

### 2. Method for Manufacturing a Polyamide Reverse Osmosis Separation Membrane Including an Antifouling Layer

The present invention provides a method for manufacturing a polyamide reverse osmosis separation membrane, the method comprising:
a first step of forming a porous polymer support layer by coating and drying a polymer solution on a surface of a porous support;
a second step of forming a polyamide layer on the surface of the polymer support layer; and
a third step of forming an antifouling layer on the surface of the polyamide layer,
wherein the antifouling layer comprises a heterocyclic amine, an aliphatic diamine, or a combination thereof.

### (1) First Step

According to the present invention, the porous support may comprise synthetic fibers or natural fibers. For example, the synthetic fibers may comprise one or more selected from polyester fibers, polypropylene fibers, nylon fibers, and polyethylene fibers, and the natural fibers may comprise cellulosic fibers. The porous support may have an average thickness of 30 to 300 µm, preferably 50 to 200 µm, but is not limited thereto.

According to the present invention, the polymer solution may comprise a polymer compound and the balance of a solvent, wherein the polymer compound may be included in an amount of 5 to 40 wt%, preferably 7 to 35 wt%, based on the total weight of the polymer solution. The polymer compound may comprise one or more selected from polysulfone-based polymers, polyethersulfone-based polymers, polyamide-based polymers, polyimide-based polymers, polyester-based polymers, olefin-based polymers, polyvinylidene fluoride, and polyacrylonitrile. The solvent included in the polymer solution is not particularly limited as long as it can uniformly and completely dissolve the polymer without precipitation, and may comprise, for example, one or more selected from N-methyl-2-pyrrolidone (NMP), dimethylformamide (DMF), dimethyl sulfoxide (DMSO), and dimethylacetamide (DMAc).

According to the present invention, the coating may be performed such that the polymer support layer has a thickness of 30 to 300 µm. When the thickness of the polymer support layer is less than 30 µm, problems such as reduced flux and poor durability due to compaction may occur, and when the thickness exceeds 300 µm, a reduction in flux may occur due to an increase in flow path length.

### (2) Second Step

According to the present invention, the polyamide layer may be formed by sequentially coating the porous support with a polyfunctional amine solution and a polyfunctional acyl halide solution. The coating of the polyfunctional amine solution may be performed on the porous support on which the polymer support layer has been formed by spray coating or dipping the polyfunctional amine solution, and may be carried out for 0.1 to 10 minutes. The polyfunctional amine may comprise m-phenylenediamine, p-phenylenediamine, 1,3,6-benzenetriamine, 4-chloro-1,3-phenylenediamine, 6-chloro-1,3-phenylenediamine, 3-chloro-1,4-phenylenediamine, or a combination thereof, but is not limited thereto.

According to the present invention, the polyfunctional acyl halide solution may be subjected to dry treatment for 5 seconds to 3 minutes. The polyfunctional acyl halide may comprise trimesoyl chloride (Trimesoyl chloride, TMC), isophthaloyl chloride (Isophthaloyl chloride, IPC), terephthaloyl chloride (Terephthaloyl chloride, TPC), or a combination thereof, but is not limited thereto.

According to the present invention, the polyamide layer may have a thickness of 0.1 to 1.0 µm. When the thickness of the polyamide layer exceeds 1.0 µm, the thickness of the selective layer may become excessively thick, thereby causing a reduction in flux.

### (3) Third Step

According to the present invention, the antifouling layer may comprise a heterocyclic amine, an aliphatic diamine, or a combination thereof. The heterocyclic amine may be selected from one or more selected from the group consisting of imidazole (Imidazole), pyridine (Pyridine), morpholine (Morpholine), and bipyridine (Bipyridine), and may be included in an amount of 0.02 to 0.2 wt% based on the total weight of the antifouling layer. The aliphatic diamine may be selected from one or more selected from the group consisting of 1,2-bis(2-aminoethoxy)ethane and 1,3-bis(2-aminopropoxy)propane, and may be included in an amount of 0.001 to 0.1 wt% based on the total weight of the antifouling layer.

According to the present invention, the amine groups in the antifouling layer may be bonded to unreacted -COCl groups of the polyamide layer.

### [ Mode for Carrying Out the Invention ]

Hereinafter, the present invention will be described in detail with reference to Examples. However, the following Examples and Experimental Examples are merely illustrative of one embodiment of the present invention, and the scope of the present invention is not limited by the following Examples and Experimental Examples.

### <Example>

### Comparative Example 1. Preparation of a Reverse Osmosis Separation Membrane Without an Antifouling Layer

A porous polysulfone support having a thickness of 140 µm cast on a nonwoven fabric having an average thickness of 100 µm was immersed for 40 seconds in an aqueous amine solution containing 2.0 wt% of m-phenylenediamine (MPD), which is a polyfunctional amine, and 0.2 wt% of ethylhexanediol as an additive, and then excess aqueous solution was removed therefrom. The support having the aqueous amine solution coated on the surface thereof was immersed for 1 minute in an organic solution containing 0.1 wt% of trimesoyl chloride (TMC) as a polyfunctional acid halide compound and an Isopar solvent as a solvent, thereby performing interfacial polymerization. Thereafter, excess organic solution was removed by blowing air at 0.5 bar for 10 seconds, and the resulting structure was dried at 25°C for 1.5 minutes to form a polyamide coating layer on the surface of the support, followed by thermal crosslinking at 60°C for 2 minutes.

### Example 1. Preparation of a Reverse Osmosis Separation Membrane Including an Imidazole Antifouling Layer

An aqueous solution containing 0.05 wt% imidazole (Imidazole) was sprayed onto the surface of the polyamide thin film prepared in Comparative Example 1 for 20 seconds, and excess solution was then removed. Thereafter, the resulting structure was dried at 50°C for 4 minutes and stored in air at room temperature for 1 day to prepare a final polyamide reverse osmosis separation membrane.

### Example 2. Preparation of a Reverse Osmosis Separation Membrane Including an Imidazole and Aliphatic Diamine Antifouling Layer

A polyamide reverse osmosis separation membrane was prepared in the same manner as in Example 1, except that 0.05 wt% imidazole (Imidazole) and 0.02 wt% aliphatic diamine (1,2-bis(2-aminoethoxy)ethane) were used instead of using 0.05 wt% imidazole (Imidazole) alone in Example 1.

### Comparative Example 2. Preparation of a Reverse Osmosis Separation Membrane Including a Methylamine Antifouling Layer

A polyamide reverse osmosis separation membrane was prepared in the same manner as in Example 1, except that methylamine (Methylamine) was used instead of imidazole (Imidazole) in Example 1.

### Comparative Example 3. Preparation of a Reverse Osmosis Separation Membrane Including a Glycine Antifouling Layer

A polyamide reverse osmosis separation membrane was prepared in the same manner as in Example 1, except that glycine (Glycine) was used instead of imidazole (Imidazole) in Example 1.

### Comparative Example 4. Preparation of a Reverse Osmosis Separation Membrane Including an Ethanolamine Antifouling Layer

A polyamide reverse osmosis separation membrane was prepared in the same manner as in Example 1, except that ethanolamine (Ethanolamine) was used instead of imidazole (Imidazole) in Example 1.

### <Experimental Example>

### Experimental Example 1. Evaluation of Flux and Salt Rejection

The reverse osmosis separation membranes prepared according to the above Examples and Comparative Examples were evaluated for permeation flux and salt rejection under conditions of an aqueous solution containing 2,000 ppm sodium chloride (NaCl) at 25°C and 225 psi. In addition, the reverse osmosis separation membranes prepared according to the above Examples and Comparative Examples were operated for 2 hours using feed water containing 50 ppm dry milk, and the flux reduction rate relative to the initial performance was measured.

**[Table]**

| No. | Flux (gfd) | Salt Rejection (%) | Flux Reduction Rate (%) |
|---|---|---|---|
| Comparative Example 1 | 25.74 | 98.87 | -15.7 |
| Example 1 | 28.09 | 99.43 | -8.64 |
| Example 2 | 27.66 | 99.64 | -8.29 |
| Comparative Example 2 | 26.88 | 99.05 | -13.95 |
| Comparative Example 3 | 26.22 | 99.35 | -15.08 |
| Comparative Example 4 | 24.91 | 99.02 | -9.96 |

As can be seen from Table 1 above, the flux, salt rejection, and flux reduction rate of Examples 1 and 2 according to the present invention were significantly improved compared to those of Comparative Examples 1 to 4. Specifically, the flux values of the reverse osmosis separation membranes according to Comparative Example 1 without an antifouling layer, Comparative Example 2 including a methylamine antifouling layer, Comparative Example 3 including a glycine antifouling layer, and Comparative Example 4 including an ethanolamine antifouling layer were 25.74, 26.88, 26.22, and 24.91, respectively, whereas the flux values of the reverse osmosis separation membranes according to Example 1 and Example 2 were confirmed to be increased to 28.09 and 27.66, respectively, as compared with the Comparative Examples. In addition, while the flux reduction rates of Comparative Examples 1 to 4 were -15.70%, -13.95%, -15.08%, and -9.96%, respectively, the flux reduction rates of the reverse osmosis separation membranes according to Example 1 and Example 2 were -8.64% and - 8.29%, respectively, demonstrating significantly improved antifouling properties as compared with the Comparative Examples.

While specific portions of the present invention have been described in detail above, it will be apparent to those skilled in the art that such specific descriptions are merely preferred embodiments and that the scope of the present invention is not limited thereby. Accordingly, the substantial scope of the present invention is defined by the appended claims and equivalents thereof.

### [Industrial Applicability]

The present invention can provide a polyamide reverse osmosis separation membrane having an excellent permeation flow rate while exhibiting significantly improved salt rejection and antifouling properties by including an antifouling layer comprising a heterocyclic amine, an aliphatic diamine, or a combination thereof on a polyamide layer.

## Claims

1. A polyamide reverse osmosis separation membrane including an antifouling layer, comprising:
a porous support;
a porous polymer support layer formed on at least one surface of the porous support;
a polyamide layer formed on the polymer support layer; and
an antifouling layer formed on the polyamide layer,
wherein the antifouling layer comprises a heterocyclic amine, an aliphatic diamine, or a combination thereof.

2. The polyamide reverse osmosis separation membrane including an antifouling layer according to claim 1,
wherein the heterocyclic amine is selected from one or more selected from the group consisting of imidazole, pyridine, morpholine, and bipyridine.

3. The polyamide reverse osmosis separation membrane including an antifouling layer according to claim 1,
wherein the heterocyclic amine is included in an amount of 0.02 to 0.2 wt% based on the total weight of the antifouling layer.

4. The polyamide reverse osmosis separation membrane including an antifouling layer according to claim 1,
wherein the aliphatic diamine is selected from one or more selected from the group consisting of 1,2-bis(2-aminoethoxy)ethane and 1,3-bis(2-aminopropoxy)propane.

5. The polyamide reverse osmosis separation membrane including an antifouling layer according to claim 1,
wherein the aliphatic diamine is included in an amount of 0.001 to 0.1 wt% based on the total weight of the antifouling layer.

6. The polyamide reverse osmosis separation membrane including an antifouling layer according to claim 1,
wherein, when the polyamide reverse osmosis separation membrane is operated for 1 hour under conditions of an aqueous solution containing 2,000 ppm sodium chloride (NaCl), at a temperature of 25°C and a pressure of 225 psi, the flux is 26 gfd or more and the salt rejection is 99.4% or more.

7. The polyamide reverse osmosis separation membrane including an antifouling layer according to claim 1,
wherein, when the flux is measured after membrane fouling is induced by circulating feed water for 2 hours under a pressure of 225 psi after additionally adding 50 ppm of dry milk, which is an organic contaminant, to feed water containing 2,000 ppm sodium chloride (NaCl), the ratio of the reduced flux relative to the initial flux is less than 10%.

8. A method for manufacturing a polyamide reverse osmosis separation membrane, comprising:
a first step of forming a porous polymer support layer by coating and drying a polymer solution on a surface of a porous support;
a second step of forming a polyamide layer on the surface of the polymer support layer; and
a third step of forming an antifouling layer on the surface of the polyamide layer,
wherein the antifouling layer comprises a heterocyclic amine, an aliphatic diamine, or a combination thereof.

9. The method for manufacturing a polyamide reverse osmosis separation membrane according to claim 8,
wherein the heterocyclic amine is selected from one or more selected from the group consisting of imidazole (Imidazole), pyridine (Pyridine), morpholine (Morpholine), and bipyridine (Bipyridine), and is included in an amount of 0.02 to 0.2 wt% based on the total weight of the antifouling layer.

10. The method for manufacturing a polyamide reverse osmosis separation membrane according to claim 8,
wherein the aliphatic diamine is selected from one or more selected from the group consisting of 1,2-bis(2-aminoethoxy)ethane and 1,3-bis(2-aminopropoxy)propane, and is included in an amount of 0.001 to 0.1 wt% based on the total weight of the antifouling layer.

11. The method for manufacturing a polyamide reverse osmosis separation membrane according to claim 8,
wherein amine groups in the antifouling layer are bonded to unreacted -COCl groups of the polyamide layer.

12. The method for manufacturing a polyamide reverse osmosis separation membrane according to claim 8,
wherein, when the polyamide reverse osmosis separation membrane is operated for 1 hour under conditions of an aqueous solution containing 2,000 ppm sodium chloride (NaCl), at a temperature of 25°C and a pressure of 225 psi, the flux is 26 gfd or more and the salt rejection is 99.4% or more, and wherein, when the flux is measured after membrane fouling is induced by circulating feed water for 2 hours under a pressure of 225 psi after additionally adding 50 ppm of dry milk, which is an organic contaminant, to feed water containing 2,000 ppm sodium chloride (NaCl), the ratio of the reduced flux relative to the initial flux is less than 10%.
